# EUROPEAN PATENT APPLICATION

(11) **EP 1 510 906 A2**
(43) Date of publication of application: **02.03.2005**
(21) Application number: 04019802.0
(22) Date of filing: 20.08.2004
(51) Int. Cl.: G06F 1/16

(54) **Electronic apparatus with detachable operation unit**

(30) Priority: 21.08.2003 JP 2003297703
(71) Applicant: Kabushiki Kaisha Toshiba, Tokyo 105-8001 (JP)
(72) Inventor: Hamada, Tomohiro, Int. Property Division, Tokyo 105-8001 (JP); Tatemichi, Atsushi, Int. Property Division, Tokyo 105-8001 (JP)
(74) Representative: Henkel, Feiler & Hänzel

(57) **Abstract**

An electronic apparatus has a housing (4), a receiving portion (15) provided on the housing (4) and adapted to receive a detachable operation unit (33, 34, 35), and a cover (56) detachably supported in the housing (4). The cover (56) features an opening (67) for exposing the detachable operation unit (33, 34, 35) being received in the receiving portion (15).

## Description

This invention relates to an electronic apparatus on which an operation unit may be mounted, and the operation unit itself.

Recently, notebook type portable computers are provided with a multi-drive in which a CD-ROM drive and a DVD-ROM drive are integrated, to play music stored in a music CD or play animation stored in a DVD.

This kind of the portable computer has plural operation buttons for controlling the multi-drive for mode switch, music return/feed, playback/temporary stop and full stop and the like. These operation buttons are disposed on the top surface of a housing provided with a keyboard for a user to operate easily.

A sophisticated portable computer having ample multi-media functions is provided with special operation buttons for selecting and activating Internet or mail function. These operation buttons are concentrated on the top surface of the housing together with the operation buttons for controlling the multi-drive. Thus, the positions of the respective operation buttons are fixed, so that they are not removed or attached depending on an application of the portable computer.

Japanese Patent Application Publication (KOKAI) No. 2002-91614 discloses a sophisticated portable computer in which a number of functions are integrated, and which provides diverse usage. In other words, for example, the operation buttons which a user operates are different between a case where its main application is for playing music or animation and a case where its main application is for accessing Internet. For the reason, if a number of the operation buttons are disposed in concentration at a fixed position on the top surface of the housing, the user may operate the operation button by mistake or may be incapable of recognizing an operation button that should be operated quickly.

Moreover, the portable computer is incapable of securing a sufficient space for disposing the operation buttons because compactness of the housing is considered important for intensifying its portability. Therefore, decrease in the size of each operation button, narrowing of the arrangement interval of the operation buttons, and the operability of the operation buttons is needed at the same time.

It is an object of the present invention to provide an electronic apparatus which enables a detachable operation unit having a function corresponding to an application to be selected freely and mounted on its housing to ensure easiness of handling.

In order to achieve the object, an electronic apparatus according to an aspect of the present invention is characterized by comprising: a housing; a receiving portion provided on the housing and adapted to receive a detachable operation unit; and a cover detachably supported in the housing, the cover including an opening for exposing the detachable operation unit being received in the receiving portion.

According the present invention, enables the detachable operation unit having an optimum function to an application of the electronic apparatus to be selected and loaded on the housing. Thus, the operability of the electronic apparatus is improved thereby its usability being improved.

This summary of the invention does not necessarily describe all necessary features so that the invention may also be a sub-combination of these described features.

The invention can be more fully understood from the following detailed description when taken in conjunction with the accompanying drawings, in which:
FIG. 1 is an exemplary perspective view of a portable computer according to an embodiment of the present invention;
FIG. 2 is an exemplary perspective view of the portable computer showing a state in which a user open area is,exposed by removing a top cover from a top wall of a housing;
FIG. 3 is an exemplary plan view of the portable computer showing a state in which the user open area is exposed by removing the top cover from the top wall;
FIG. 4 is an exemplary perspective view of a reverse surface of the top cover;
FIG. 5 is an exemplary perspective view of the portable computer showing a receiving portion of the housing and a plurality of operation units to be selectively attached in the receiving portion;
FIG. 6 is an exemplary perspective view of a first operation unit;
FIG. 7 is an exemplary sectional view of the portable computer showing a state in which a connector disposed in the receiving portion and a signal connecting terminal of the first operation unit are electrically connected;
FIG. 8 is an exemplary sectional view of the portable computer showing the state in which the first operation unit is fixed on the receiving portion through screws;
FIG. 9 is an exemplary sectional view showing a section A of FIG. 7; and
FIG. 10 is an exemplary sectional view of the portable computer showing a process in which the first operation unit is attached in the receiving portion.

Various'embodiments according to the present invention will be described hereinafter with reference to the accompanying drawings. In general, according to one embodiment of the invention, a communication device comprises a housing and a receiving portion on the housing. The receiving portion has a ground connecting terminal arranged at one end and a signal connecting terminal at the other end. An operation unit is detachably mounted in the receiving portion. The operation unit comprises (i) a ground terminal for connection to the ground connecting terminal when the operation unit is mounted in the receiving portion, and (ii) a signal terminal for connection to the signal connecting terminal after the ground connecting terminal is connected to the ground terminal. The housing supports a cover that has an opening for exposing the operation unit.

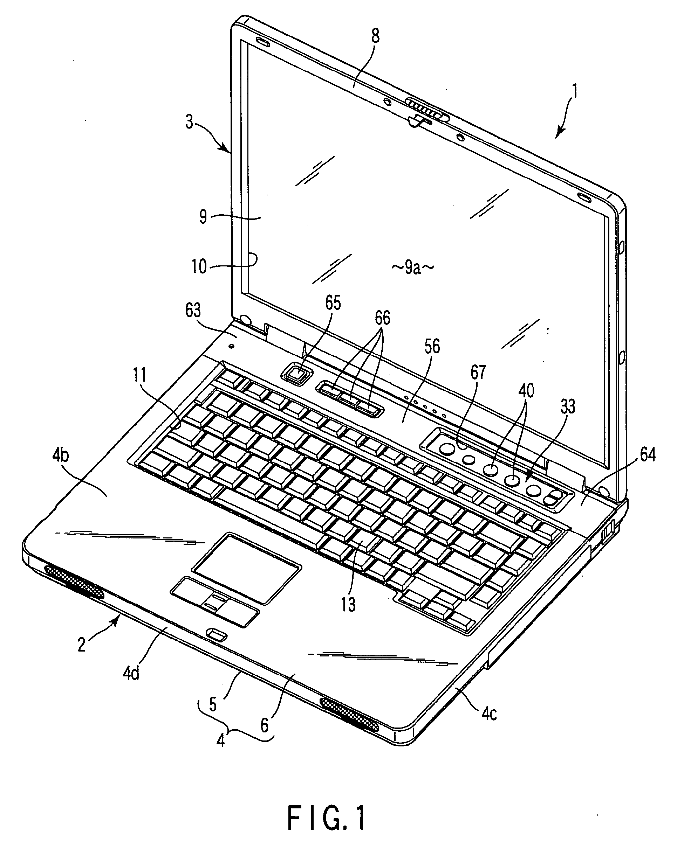

According to an embodiment, FIG. 1 shows a portable computer 1 which is an electronic apparatus. The portable computer 1 comprises a computer main body 2 and a display unit 3. The computer main body 2 has a synthetic resin made housing 4. The housing 4 is a flat box comprised of a bottom wall 4a, top wall 4b, right/left side walls 4c, front wall 4d and rear wall (not shown). The housing 4 is divided to two sections, that is a lower housing 5 containing the bottom wall 4a and an upper housing 6 containing the top wall 4b. The lower housing 5 and upper housing 6 are fastened together by any conventional fastener (e.g., screws).

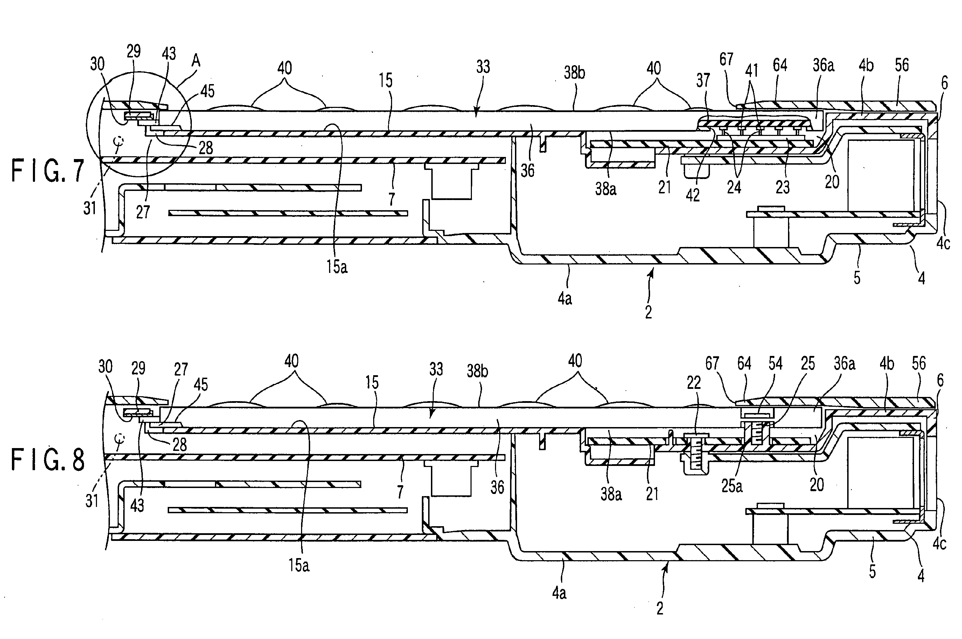

The housing 4 accommodates a printed circuit board 7 shown in FIG. 7, a multi-drive in which a CD-ROM drive and a DVD-RAM drive are integrated and a hard disc drive. The printed circuit board 7 is loaded with a semiconductor package constituting a CPU and other electronic part.

The display unit 3 has a display housing 8 and a liquid crystal display panel 9. The display housing 8 is a flat box and an end portion thereof is joined to the rear end of the housing 4 rotatably through hinges (not shown). The liquid crystal display panel 9 is accommodated in the display housing 8. The liquid crystal display panel 9 has a screen 9a for displaying a picture. The screen 9a is exposed outside of the display housing 8 through an opening portion 10 formed on the front surface of the display housing 8.

The display unit 3 is rotatable between its opening position and its closing position. At the opening position, the display unit 3 is erected relative to the housing 4 so as to expose the top wall 4b of the housing 4 and the screen 9a. At the closing position, the display unit 3 is laid over the housing 4 so as to cover the top wall 4b of the housing 4 from above.

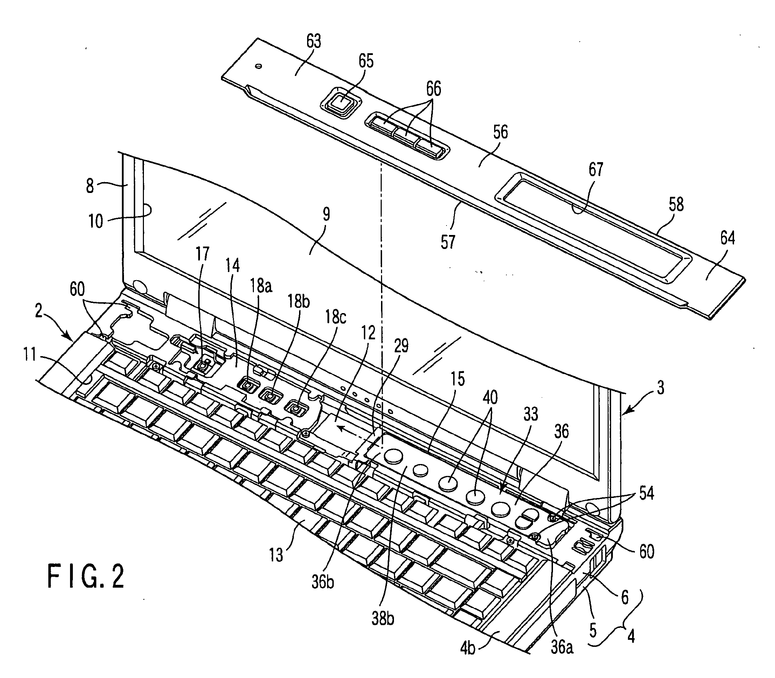

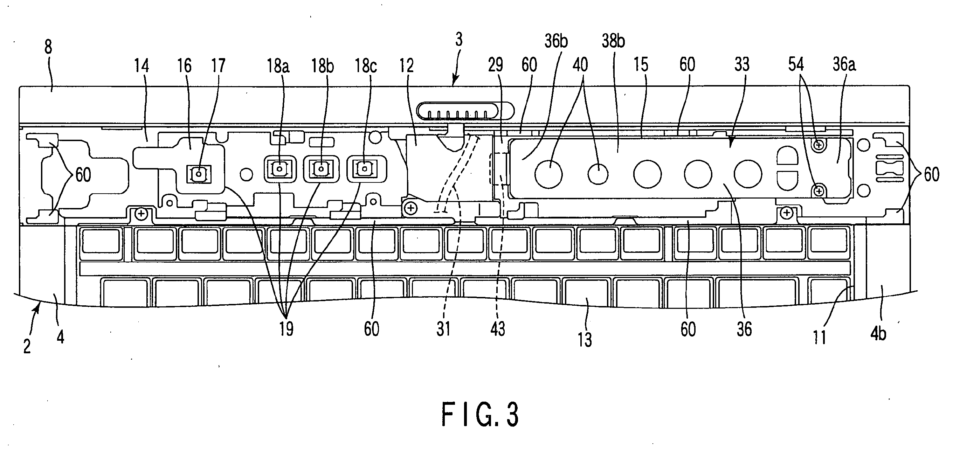

As shown in FIGS. 2 and 3, the top wall 4b of the housing 4 has a keyboard supporting portion 11 and a user open area 12. The keyboard supporting portion 11 is a recessed area formed in the top surface of the top wall 4b. For this embodiment of the invention, keyboard supporting portion 11 is substantially rectangular and concave in shape to support a keyboard 13.

The user open area 12 is a region that a user of the portable computer 1 may access voluntarily and is located behind the keyboard 13. This user open area 12 is dented relative to the top surface of the top wall 4b of the housing 4 and extended in the width direction of the housing 4. An end of the user open area 12 is open to a corner portion defined by the top wall 4b and the side wall 4c on the left side, of the housing 4. Likewise, the other end of the user open area 12 is open to a corner portion defined by the top wall 4b and the side wall 4c on the right side, of the housing 4.

As shown in FIGS. 2, 3, 5 and 7, the user open area 12 includes a switch installation portion 14 and a receiving portion 15. The switch installation portion 14 is located at a left half of the user open area 12, and covers a switch substrate 16 accommodated in the housing 4 from above. A power switch 17 and plural switches 18a, 18b and 18c related to Internet functionality are mounted on the top surface of the switch substrate 16. These switches 17, 18a, 18b and 18c are exposed to the user open area 12 through four through holes 19 made in the switch installation portion 14.

The receiving portion 15 is located on the right half of the user open area 12. The receiving portion 15 is a hollow area formed in the user open area 12, which is generally rectangular in shape extending in the width direction of the housing 4. The receiving portion 15 has a horizontal bottom surface 15a. A generally concave portion 20 is formed in this bottom surface 15a. The concave portion 20 is located at an end along the longitudinal direction of the receiving portion 15.

A connector substrate 21 is accommodated within the concave portion 20. The connector substrate 21 is fixed to the bottom of the concave portion 20 through a screw 22. The connector substrate 21 is connected to the printed circuit board 7 through a cable (not shown) and a connector 23 is installed on the top surface of this connector substrate 21. The connector 23 includes multiple signal connecting terminals 24 protruded upward. The signal connecting terminals 24 are exposed to the receiving portion 15.

A pair of boss portions 25 is formed on the bottom of the concave portion 20. The boss portions 25 are protruded upward from the bottom of the concave portion 20 and oppose each other across the connector 23. Each boss portion 25 has a screw hole 25a as shown in FIG. 8. The screw hole 25a is open in a top end surface of the boss portion 25.

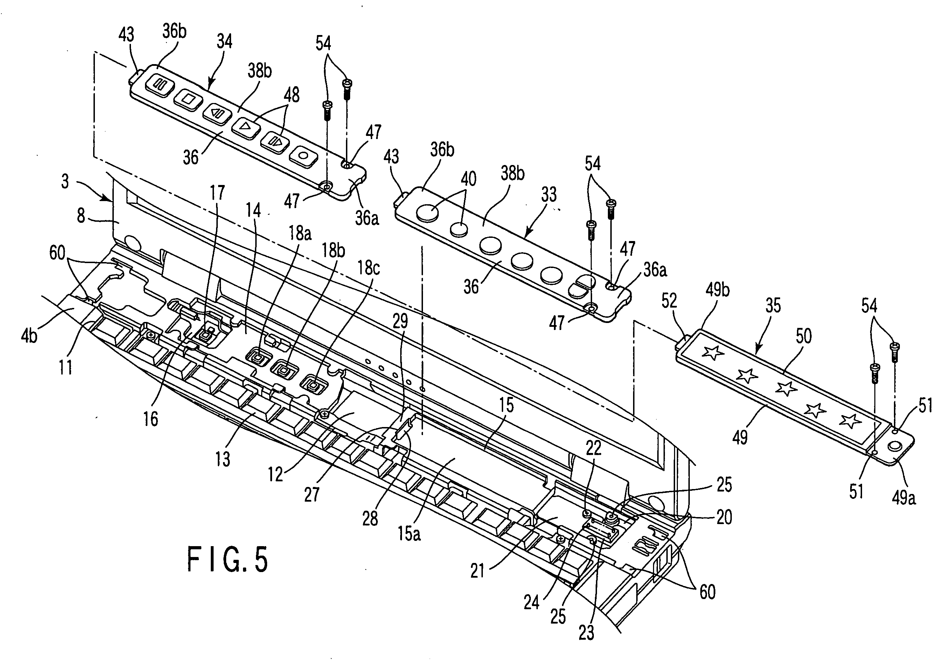

As shown in FIGS. 5 and 7, an engaging portion 27 is formed in the other end along the longitudinal direction of the receiving portion 15. The engaging portion 27 has an insertion hole 28 and a terminal supporting wall 29. The insertion hole 28 is located in a corner defined by the bottom surface 15a and the left side surface, of the receiving portion 15 and open to the inside of the housing 4. The terminal supporting wall 29 is integrated with the top wall 4b of the housing 4 and located above the bottom surface 15a of the receiving portion 15.

The lower surface of the terminal supporting wall 29 is continuous to an opening top edge of the insertion hole 28. A sheet-like grounding connecting terminal 30 is attached on the lower surface of the terminal supporting wall 29. The grounding connecting terminal 30 is electrically connected to a plating layer (not shown) for shield which covers the inside surface of the housing 4. This plating layer is electrically connected to a ground layer of the printed circuit board 7.

As shown in FIG. 3, a cable 31 through which an image signal flows is disposed below the user open area 12. The cable 31 electrically connects the printed circuit board 7 with the liquid crystal display panel 9 and passes near the engaging portion 27 of the receiving portion 15.

As shown in FIG. 5, the receiving portion 15 in the user open area 12 receives and holds any one of a plurality of operation units 33-35, which are selectively detachable from receiving portion 15. These operation units 33-35 include a first operation unit 33 adapted for input of characters, a second operation unit 34 adapted for audio control, and a decoration unit 35.

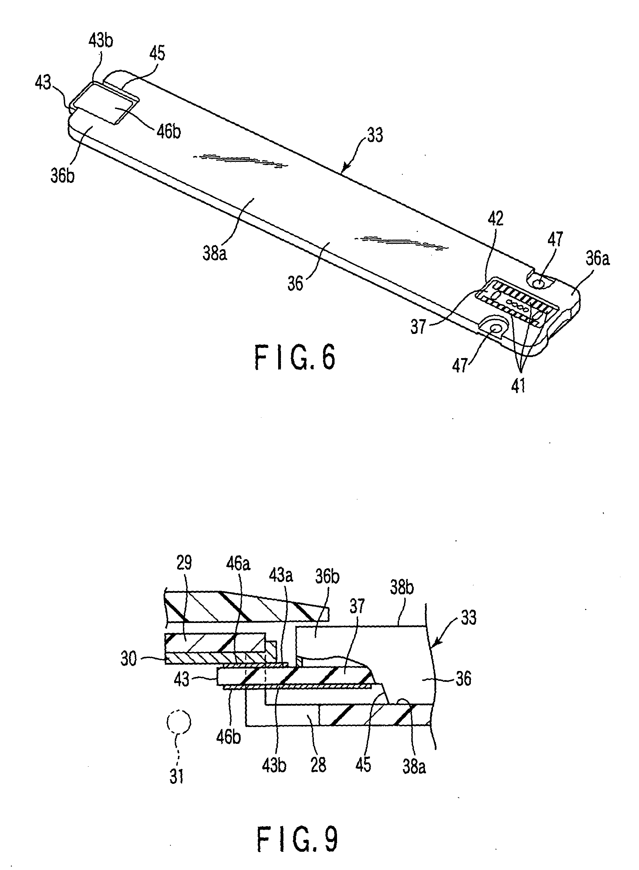

As shown in FIGS. 6 and 7, the first operation unit 33 comprises a main body 36 and a switch substrate 37. The main body 36 is an elongated plate, which may engage the receiving portion 15 and has a first end portion 36a and a second end portion 36b, which are separated in the longitudinal direction. Further, the main body 36 has a lower surface 38a as a first surface and an upper surface 38b as a second surface.

Multiple character input related operation buttons 40, for, for example, character enlargement, new creation, word/phrase registration, Japanese/English switching and input mode switching are disposed on the upper surface 38b of the main body 36. The operation buttons 40 may be depressed by a user and arranged in line in the longitudinal direction of the main body 36.

The switch substrate 37 is covered with the main body 36. The switch substrate 37 includes a plurality of switches (not shown), which are opened/closed by the operation buttons 40 and signal terminals 41. The signal terminals 41 are located at the first end portion 36a of the main body 36 and exposed outside through an opening 42 formed in the lower surface 38a of the main body 36.

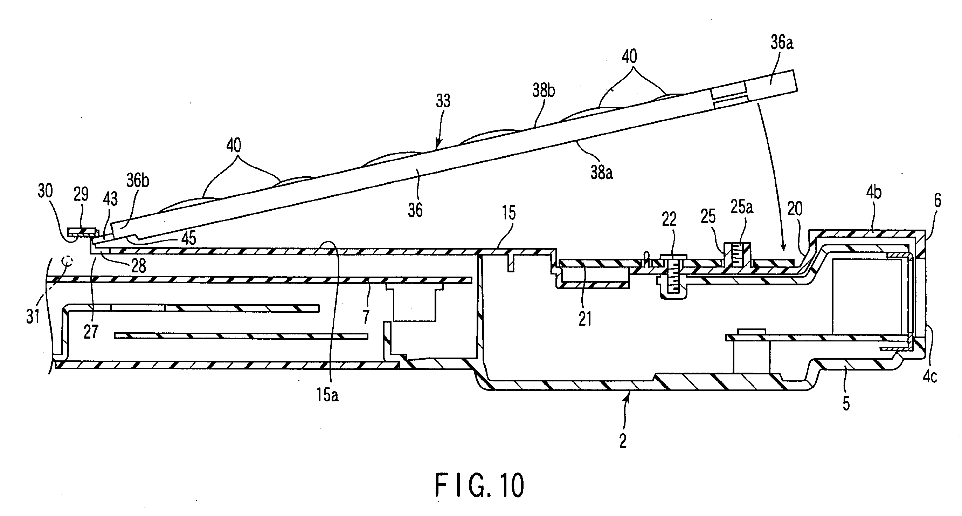

As shown in FIG. 9, the switch substrate 37 has a tongue piece 43. The tongue piece 43 protrudes from the second end portion 36b of the main body 36 in the longitudinal direction of the main body 36 and is inserted into the insertion hole 28 of the receiving portion 15 detachably. The tongue piece 43 has a first terminal surface 43a generally continuous to the upper surface 38b of the main body 36 and a second terminal surface 43b generally continuous to the lower surface 38a of the main body 36. Further, a cutout 45 is formed at a portion corresponding to the second end portion 36b of the lower surface 38a of the main body 36. The cutout 45 is continuous to the tongue piece 43 and the switch substrate 37 is exposed in this cutout 45. Consequently, the second terminal surface 43b of the tongue piece 43 is substantially enlarged.

First and second ground terminals 46a and 46b are disposed on the first and second terminal surfaces 43a and 43b of the tongue piece 43 respectively. The first and second ground terminals 46a and 46b are electrically connected to the ground layer of the switch substrate 37. These first and second ground terminals 46a and 46b are spread into a plane along the first and second terminal surfaces 43a and 43b. The area of the second ground terminal 46b is larger than the area of the first ground terminal 46a by that of the cutout 45.

Referring to FIGS. 6 and 8, a pair of screw through holes 47 is formed as fixing portions in the first end portion 36a of the main body 36. The screw through holes 47 corresponds to the screw holes 25a in the boss portions 25 and these oppose each other across the signal terminals 41.

The second operation unit 34 for audio control has the same configuration as the first operation unit 33 except that its switch functions are different. Thus, like reference numerals are attached to the same components as the first operation unit 33 and description thereof is omitted.

As shown in FIG. 5, multiple operation buttons 48 are related to audio control, namely fast forward, reverse, stop, playback and pause for example, are disposed on the upper surface 38b of the main body 36. The audio control is selected by depressing operation buttons 48 which are arranged in line in the longitudinal direction of the main body 36.

The decoration unit 35 has a photo frame 49. The photo frame 49 is an elongated plate that may engage the receiving portion 15 and has a flat top surface 50 on which, for example, a photograph or seal may be attached. In other words, the decoration unit 35 has a function for displaying a photograph or sticker that the user desires.

The photo frame 49 has a first end portion 49a and a second end portion 49b which are departed in the longitudinal direction. A pair of screw through holes 51 is formed as fixing portions in the first end portion 49a of the photo frame 49. The screw through holes 51 are spaced in the width direction of the photo frame 49 so as to correspond to the screw holes 25a in the boss portions 25 as discussed with respect to the first operation unit 33 of FIG. 6.

A tongue piece 52 of the decoration unit 35 is formed at the second end portion 49b of the photo frame 49. The tongue piece 52 is protruded from the second end portion 49b of the photo frame 49 in the longitudinal direction of the photo frame 49 and inserted into the insertion hole 28 of the receiving portion 15 detachably.

Next, the procedure for mounting/removing any one of the first/second operation units 33, 34 and the decoration unit 35 in/from the receiving portion 15 of the housing 4 will be described.

Because this procedure is common to the first operation unit 33, the second operation unit 34 and the decoration unit 35, it will be described by taking the first operation unit 33 as an example.

The main body 36 of the first operation unit 33 is gripped with the hand and the upper surface 38b on which the operation buttons 40 are disposed is surfaced upward. Next, as shown in FIG. 10, the main body 36 is introduced into the receiving portion 15 in its oblique condition with the tongue piece 43 protruded from the second end portion 36b of the main body 36 held at the head and the tongue piece 43 is inserted into the insertion hole 28 in the engaging portion 27. Consequently, the first ground terminal 46a on the tongue piece 43 makes a contact with the ground connecting terminal 30 located on the engaging portion 27.

Next, as shown with an arrow in FIG. 10, the first operation unit 33 is rotated downward with a contact portion between the first ground terminal 46a and the ground connecting terminal 30 as a fulcrum. In other words, the first operation unit 33 is pivoted about the second end portion 36b, to be precise, the tongue piece 43. As a result of this rotation, the main body 36 is engaged in the receiving portion 15 so that the lower surface 38a of the main body 36 overlaps the bottom surface 15a of the receiving portion 15. At the same time, the first end portion 36a of the main body 36 opposes the connector substrate 21 and the signal terminals 41 exposed on the lower surface 38a of the main body 36 strikes the signal connecting terminals 24 of the connector 23 (see FIG. 7). Thus, the signal terminals 41 makes a contact with the signal connecting terminals 24 after the first ground terminal 46a of FIG. 9 makes contact with the ground connecting terminal 30. Further, the screw through holes 47 of the main body 36 match the screw holes 25a in the boss portions 25.

Next, the screws 54 are inserted into the screw through holes 47 in the main body 36 (see FIG. 5) and the screws 54 are screwed into the screw holes 25a in the boss portions 25 (see FIG. 8). Consequently, the first end portion 36a of the main body 36 is fixed on the boss portions 25 so that the screws 54 maintains a signal contact between the signal terminals 41 of the main body 36 and the signal connecting terminals 24 of the connector 23 (see FIG. 8).

With the main body 36 fixed to the boss portions 25, the first end portion 36a of the main body 36 receives a downward force. Thus, the second end portion 36b of the main body 36 at which the tongue piece 43 is located receives an upward force, so that the first ground terminal 46a of FIG. 9 on the tongue piece 43 is pressed against the ground connecting terminal 30. Consequently, the screws 54 also maintain a ground contact between the first ground terminal 46a and the ground connecting terminal 30. Then, installation of the first operation unit 33 is completed.

When the main body 36 is fixed to the boss portions 25, the tongue piece 43 remains inserted into the insertion hole 28. Thus, the second ground terminal 46b located at the second terminal surface 43b of the tongue piece 43 is exposed within the housing 4 (see FIG. 9) and at the same time, located adjacent to the cable 31 through which an image signal flows (see FIG. 3).

On the other hand as shown in FIGS. 3 and 10, when the first operation unit 33 is detached from the receiving portion 15 in the housing 4, the screws 54 are loosened to release the fixing of the main body 36 onto the boss portions 25. Next, the first end portion 36a of the main body 36 is lift up to lift up the main body 36 from the receiving portion 15 and at the same time, the tongue piece 43 is pulled out of the insertion hole 28. Consequently, the detachment of the first operation unit 33 is completed.

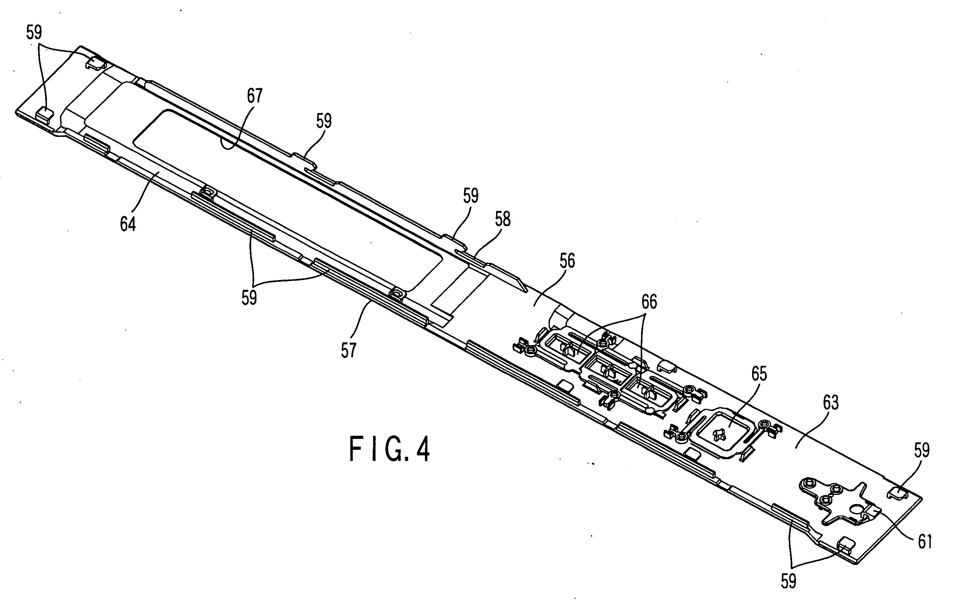

As shown in FIGS. 3 and 4, the user open area 12 of the housing 4 is covered with a top cover 56 that is detachable. The top cover 56 is an elongated plate extended in the width direction of the housing 4. This top cover 56 has a front edge portion 57 to be located adjacent the keyboard 13 and a rear edge portion 58 to be located opposite to the front edge portion 57.

Multiple engaging protrusions 59 are formed to protrude downward at the front edge portion 57 and rear edge portion 58 of the top cover 56. The engaging protrusions 59 correspond to multiple engaging holes 60 formed in the peripheral portion of the user open area 12. The engaging protrusions 59 are engaged with the engaging holes 60 by sliding in the width direction of the housing 4.

A lock member 61 is attached to the left end portion of the top cover 56. When the engaging protrusions 59 on the top cover 56 engage the engaging holes 60, the lock member 61 is hooked by the switch installation portion 14 in the user open area 12, thereby restricting a slide of the top cover 56 in the direction in which the engaging protrusions 59 depart from the engaging holes 60. Consequently, the top cover 56 is held at a specified position of the housing 4.

The top cover 56 has a first cover portion 63 corresponding to the switch installation portion 14 and a second cover portion 64 corresponding to the receiving portion 15. The first cover portion 63 has a power switch button 65 and plural operation buttons 66. The power switch button 65 and operation buttons 66 are supported by the first cover portion 63 such that they may be deformed vertically and oppose the power switch 17 and other switches 18a, 18b and 18c.

The second cover portion 64 has an opening 67. The opening 67 is a slit extending in the longitudinal direction of the top cover 56 and located just above the receiving portion 15. When any one of the first operation unit 33 and the second operation unit 34 is mounted on the receiving portion 15, the opening 67 exposes the operation buttons 40 outside of the housing 4. Further, when the decoration unit 35 is mounted on the receiving portion 15, the opening 67 exposes a photograph or sticker attached to the photo frame 49 outside of the housing 4.

The installation/removal work of the first operation unit 33, the second operation unit 34 and the decoration unit 35 onto/from the receiving portion 15 are carried out in a state that the user open area 12 is exposed by removing the top cover 56 from the housing 4.

If the portable computer 1 having such a configuration is used for mainly character input, the operation buttons 40 of the first operation unit 33, which are mounted on the receiving portion 15 in the housing 4, relate to character input. These operation buttons 40 are exposed through the opening 67 of the top cover 56.

If this computer is used for mainly listening to music stored in, for example, a music CD or watching a movie stored in a DVD, the second operation unit 34 is mounted on the receiving portion 15 of the housing 4. The operation buttons 48 relate to audio control and are exposed through the opening 67 in the top cover 56. Therefore, the operation buttons 40 or 48 may be operated with the finger of the hand like the keyboard 13.

If the first operation unit 33 or the second operation unit 34 is not required, the decoration unit 35 is mounted on the receiving portion 15 of the housing 4. Consequently, the photo frame 49 on which a photograph or sticker desired by the user is attached may be exposed through the opening 67 in the top cover 56, thereby intensifying the decorative effect of the portable computer 1.

Any one having an optimum function for the application of the portable computer 1 may be selected from the first operation unit 33, the second operation unit 34 and the decoration unit 35 and mounted on the receiving portion 15. Thus, as compared to a case where multiple operation buttons are disposed in concentration on a single position, the operation buttons 40 or 48 may be enlarged or the arrangement interval of the operation buttons 40 or 48 may be enlarged.

The operability of the operation buttons 40 or 48 is improved thereby usability of the portable computer 1 being improved.

With the above-described configuration, as shown in FIGS. 3, 7 and 9 when the first operation unit 33 or the second operation unit 34 is mounted on the receiving portion 15, the first ground terminal 46a of the tongue piece 43 initially comes into contact with the ground connecting terminal 30 of the housing 4. In other words, the first ground terminal 46a of the first operation unit 33 or the second operation unit 34 makes contact with the ground connecting terminal 30 before the signal terminals 41 makes contact with the signal connecting terminals 24 of the connector 23.

Thus, even if the first operation unit 33 or the second operation unit 34 is charged with static electricity, this static electricity may be discharged to the housing 4 from the first ground terminal 46a through the ground connecting terminal 30. For the reason, when the first operation unit 33 or the second operation unit 34 is mounted on the receiving portion 15, static electricity is prevented from flowing to the printed circuit board 7 through the connector substrate 21, thereby a precision semiconductor package or electronic parts on the printed circuit board 7 is protected from damages.

Further, with the above-described configuration, when the first operation unit 33 or the second operation unit 34 is mounted on the receiving portion 15, the second ground terminal 46b located on the second terminal surface 43b of the tongue 43 is exposed inside the housing 4 and located near the cable 31 through which an image signal flows. Thus, when electromagnetic noise is emitted from the cable 31, this electromagnetic noise may be led to the ground through the second ground terminal 46b.

According to this embodiment, the first end portion of the first or second operation unit is fixed on the receiving portion of the housing by screws. However, the present invention is not limited to this example, but it is permissible to provide the receiving portion with, for example, an elastically deformable latch and fix the first or second operation unit on the receiving portion by hooking this latch on the first end portion.

The operation unit is not limited to two kinds for the character input and audio but it is permissible to add an operation unit having control keys relating to, for example, Internet connectivity and functionality.

## Claims

1. An electronic apparatus **characterized by** comprising:
a housing (4);
a receiving portion (15) provided on the housing (4) and adapted to receive a detachable operation unit (33, 34, 35); and
a cover (56) detachably supported in the housing (4), the cover (56) including an opening (67) for exposing the detachable operation unit (33, 34, 35) being received in the receiving portion (15).

2. An electronic apparatus according to claim 1, **characterized in that** the opening (67) of the cover (56) exposes a plurality of operation buttons (40,48) arranged on the operation unit (33, 34).

3. An electronic apparatus according to claim 1, **characterized in that** the receiving portion (15) includes an engaging portion (27) detachably coupled to the operation unit (33, 34, 35).

4. An electronic apparatus according to claim 1, **characterized in that** the receiving portion (15) includes a ground connecting terminal (30) arranged at one end and a signal connecting terminal (24) arranged at other end.

5. An electronic apparatus according to claim 4, **characterized in that** the operation unit (33, 34) includes a ground terminal (46a, 46b) to be connected to the ground connecting terminal (30) and a signal terminal (41) to be connected to the signal connecting terminal (24).

6. An electronic apparatus according to claim 5, **characterized in that** the operation unit (33, 34) includes a first end portion (36a) at which the signal terminal (41) is arranged, and a second end portion (36b) at which the ground terminal (46a, 46b) is arranged.

7. An electronic apparatus according to claim 1, **characterized in that** the operation unit is selected from a plurality of operation units (33, 34, 35).
